Europäisches Patentamt

European Patent Office

Office européen des brevets

(11) Veröffentlichungsnummer: **0 266 642 B1**

(12) **EUROPÄISCHE PATENTSCHRIFT**

(45) Veröffentlichungstag der Patentschrift: **17.07.91**

(51) Int. Cl.⁵: **B60R 19/22**

(21) Anmeldenummer: **87115568.5**

(22) Anmeldetag: **23.10.87**

(54) **Kunststoffdämpfer für Stossfänger.**

(30) Priorität: **05.11.86 DE 3637751**

(43) Veröffentlichungstag der Anmeldung:
**11.05.88 Patentblatt 88/19**

(45) Bekanntmachung des Hinweises auf die
Patenterteilung:
**17.07.91 Patentblatt 91/29**

(84) Benannte Vertragsstaaten:
**DE ES FR GB IT SE**

(56) Entgegenhaltungen:
**DE-A- 2 258 181**
**US-A- 3 852 150**
**US-A- 3 860 279**
**US-A- 4 186 915**

(73) Patentinhaber: **BAYER AG**

**W-5090 Leverkusen 1 Bayerwerk(DE)**

(72) Erfinder: **Goldbach, Hubert, Dipl.-Ing.**
**Grevenhauser Weg 33**
**W-4030 Ratingen 8(DE)**
Erfinder: **Kammerer, Roderich, Dr.**
**Königin-Sophie-Strasse 8**
**W-5340 Bad Honnef(DE)**

EP 0 266 642 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft Kunststoffdämpfer für Stoßfänger zur zerstörungsfreien Absorption von Stoßenergie beim Auffahren eines Fahrzeuges, bestehend aus einem Lager im Bereich des Stoßfängers und einem Lager im Bereich der Karosserie, zwischen denen ein federndes Element aus Kunststoff vorgesehen ist, das über zusätzlich angeordnete elastische Körper einstellbar ist.

Kunststoffdämpfer mit diesen Merkmalen sind aus US-A-3 852 150 bekannt.

Bekannt sind ferner als Elemente metallene hydraulische Stoßdämpfer, bei denen das Öl über Düsen eines Kolbens in den freien Zylinderraum gedrückt wird. Wegen der systembedingten Kolbenführung in einer Richtung sind solche Stoßdämpfer für schräge bzw. einseitige Stöße, wie sie bei Auffahrunfällen häufig auftreten, ungünstig. Auch ist der technische Aufwand sowie die Wartung groß, da es sich um Präzisionsteile handelt.

Weiter sind Stoßdämpfer aus Kunststoff bekannt, die im Kern eine Wabenstruktur besitzen, die sich unter Belastung bleibend verformen und dadurch die Stoßenergie aufnehmen.

Aufgrund der zurückbleibenden Verformung der Konstruktion muß dann das Aggregat komplett ausgetauscht werden.

Aufgabe der Erfindung ist es, einen Kunststoffdämpfer für einen Stoßfänger zu finden, der bei einer Aufprallgeschwindigkeit des Fahrzeuges bis 8 km/h und einem Verformungsweg kleiner als 50-70 mm auch schräge Stöße aufnimmt, und bei dem trotz großer Energieumwandlung sowie hoher Dämpfung nach der Entlastung keine bleibenden Material- oder Formveränderungen auftreten.

Die Aufgabe wird erfindungsgemäß dadurch gelöst, daß das federnde Element Gleitflächen aufweist, mit denen es sich auf korrespondierenden Gleitflächen der Lager abstützt, wobei die elastischen Körper zwischen zur Hauptstoßrichtung geneigten Rippen bzw. Schenkeln angeordnet sind, und wobei auf diesen Rippen bzw. Schenkeln die Gleitflächen angeordnet sind.

Die erfindungsgemäße Konstruktion erlaubt es, die Festigkeit des Kunststoffes unter der Belastung der Aufprallkräfte bis in den zulässigen Grenzbereich auszunutzen, der aber nie überschritten wird, da dann die verformbaren Elemente an den Gleitflächen ausweichen. Weiter hat sich gezeigt, daß durch den elastischen Körper ein Kraft-Weg Verlauf - die Kraft steigt auf kruzem Weg steil an und nimmt nochmals auf einem langen Weg leicht zu, um schließlich steil auf kurzem Weg abzufallen2 - eine Hystereseschleife ergibt, aus der hervorgeht, daß beim Stoß eine erhebliche Energie umgewandelt wird. Da die Bewegung des Elementes nur langsam abgebremst wird, geht das Element, welches sich ja frei bewegen kann, ohne große Schwingungen in die Ausgangslage zurück.

Für den Fachmann wird es somit möglich, den Kunststoffdämpfer entsprechend den Anforderungen durch entsprechende konstruktive Maßnahmen und Auswahl der Werkstoffe praxisgerecht auszulegen.

Weitere Ausgestaltungen der Erfindung sind in den Unteransprüchen angegeben.

Bei einem Element mit Mittelsteg und beidseitig unter einem Winkel von 60 bis 85° angebrachten Rippen ist es möglich, durch elastische Körper sowie durch das Trägheitsmoment bzw. die Krümmung der Rippen den Gleitbeginn der Gleitflächen auf der Wand des Gehäuses im voraus festzustellen, so daß der Kraft-Weg Verlauf im ersten Abschnitt steil eingestellt werden kann. Danach tritt eine Verformung ein, die schließlich mit einem weiteren Kraftanstieg endet. Nach der Entlastung wird die Kraft wieder auf kurzem Weg abgebremst. Da die elastischen Körper diese Bewegung nicht behindern, sondern sogar noch unterstützen, wird die Ausgangsform wieder erreicht. Durch die Hysterese wird ein großer Teil der Energie in Wärme umgewandelt, die dann unbehindert abfließen kann.

Bei einem anderen Kunststoffdämpfer gleiten die einander zugewandten Schenkel von umgekehrt gegenüberliegenden schräggestellten bzw. v-förmigen Elementen aufeinander, wobei der seitliche Druck neben der durch Formgebung erzeugten Vorspannung noch durch beiderseitiges Ausschäumen mit Kunststoffschaum erhöhtwird. Gleichzeitig dämpft der Schaumstoff die Bewegungen, wodurch Aufschwingungen des Systems vermieden werden.

In einer vorteilhaften Ausführungsform werden die Gleitflächen durch Erhebungen (Höcker) der Vertiefungen (Rillen) strukturiert bzw. mit Reibmaterial beschichtet, wodurch die Gleitreibungskoeffizienten entsprechend den Erfordernissen variiert werden können.

Für elastische Körper hat sich insbesondere in situ geschäumter Kunststoffschaum als vorteilhaft erwiesen, da er neben der Aufbringung der Stützkraft auch ein Überschwingen bei Entlastung verhindert. Das Volumen und die Dichte sollten so groß sein, daß bei vollständigem Zusammendrükken das eigentliche Kunststoff-Element noch nicht beschädigt wird.

Denkbar sind gerade oder gebogene elastische Streifen, die unter starker Beanspruchung sich krümmen. Durch Veränderung der Steifigkeit, beispielsweise durch mindestens zwei Halterungen von parallelen, entgegengesetzt verankerten Streifen, kann Zeit und Größe der Durchbiegung genau eingestellt werden.

Eine weitere Verbesserung ist durch stufenweise Anbringung und/oder Kombination verschiedener elastischer Körper möglich.

Die Stützkraft kann auch durch ein Zugglied aufgebracht werden, wenn die gegenüberliegenden Schenkel des elastischen Elementes durch Zugorgane in Form von Seilen, Bändern und/oder Rippen verbunden sind. Nach dem Überstülpen auf einen sich allmählich erweiternden Körper wird beim Absenken das Zugorgan immer mehr gespannt, wodurch die Anpreßkraft der Schenkel an den gemeinsamen Gleitflächen erhöht wird. Die Schenkel bzw. das Auflager kann dabei kurvenförmig ausgebildet sein, so daß durch Beschränkung der Kontaktfläche in verschiedenen Zeitpunkten die Kraftaufnahme in gewünschter Weise beeinflußt werden kann.

Durch Schlitze im Auflager wird das Zugband bis zum völligen Zusammendrücken des Kunststoff-Stoßdämpfers nicht in seiner Funktion behindert.

Schließlich kann noch ein Rückstellorgan in Form eines elastischen Schaumstoffes oder einer Feder eingebaut werden, so daß der Stoßdämpfer nach Erledigung des Stoßvorganges in die Ausgangsposition zurückgeht.

Weiter ist es vorteilhaft die Elemente in einem geschlossenen Rahmen oder einem Gehäuse anzuordnen, welches dann als eine Einheit (Stoßdämpfer) zwischen Stoßfänger und Fahrzeugrahmen angeordnet werden kann.

Ein Beispiel der Erfindung ist in den Zeichnungen dargestellt und wird im folgenden beschrieben. Es zeigen:

Fig 1    Kraft-Weg Diagramm

Fig. 2    Kunststoffdämpfer aus X-Element mit Kunststoffschaum

Fig. 3    Kunststoffdämpfer aus U-Element mit Kunststoffschaum

Fig. 4    Kunststoffdämpfer aus Trapez-Element mit Kunststoffschaum

Fig. 5    Kunststoffdämpfer aus U-Element mit Kunststoffstreifen

Fig. 6    Kunststoffdämpfer mit Zugband in Schlitzen

Fig. 7    Kunststoffdämpfer mit trapezartiger Form

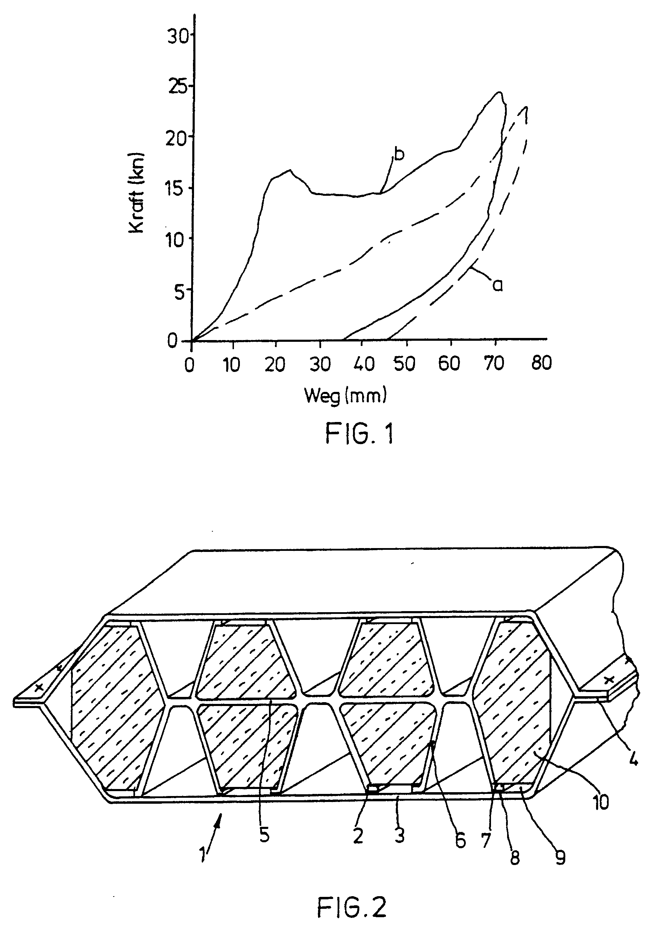

In Fig. 1 sind Diagramme gezeichnet, welche den Kraft-Weg Verlauf von verschiedenen Kunststoffdämpfern angeben. Bei Stoßdämpfern mit Kunststoff steigt die Kurve a mit der Belastung nahezu proportional zum Weg an, um nach der Entlastung schnell abzufahren. Dagegen weist die Kurve b der erfindungsgemäßen Konstruktion auf dem ersten Stück des Weges einen steilen Anstieg auf, der dann nahezu parallel verläuft, um schließlich wieder in die Ausgangslage zurückzugehen. Hier wird deutlich, daß die verbrauchte Arbeit, und damit die umgewandelte Energie, bei der erfindungsgemäßen Konstruktion wegen der überstrichenen Fläche Kraft x Weg viel günstiger als im ersten Fall ist.

In Fig. 2 ist ein Kunststoffdämpfer 1 mit x-förmigen Elementen 2 in einem zweiteiligen Gehäuse 3 mit Verbindungsflansch 4 dargestellt. Das Element 2 besteht aus einem Mittelsteg 5, der auf beiden Seiten schräg gestellte Rippen 6 besitzt, die am Ende mit einem abgeknickten Schenkel 7 mit Gleitflächen 8 versehen sind. Die Schenkel 7 stützen sich gegen die innere Wand 9 des Gehäuses 3 ab. Weiter sind als elastische Körper jeweils zwischen den zueinander geneigten Rippen 6 Kunststoffschäume 10 angeordnet.

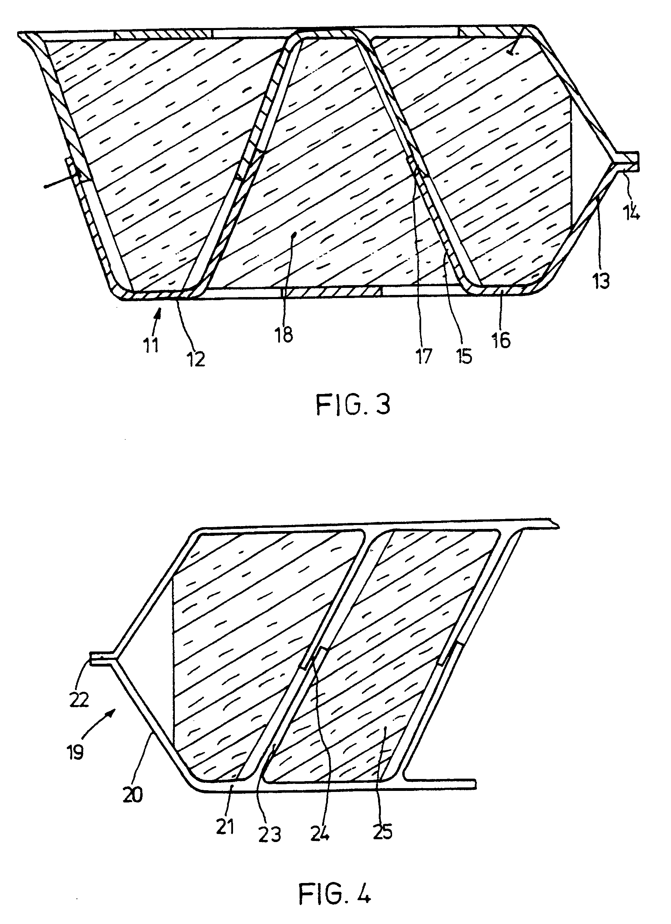

In Fig. 3 ist ein Kunststoffdämpfer 11 mit spiegelbildlich und versetzt angeordneten v- bzw. u-förmigen Elementen 12 vorgesehen, die in dem Gehäuse 13 mit Verbindungsflansch 14 integriert sind. Die geneigten beidseitig angeordneten Rippen 15 der als Wand des Gehäuses 13 ausgebildeten Querstückes 16 berühren sich an den Gleitflächen 17. Der Zwischenraum ist mit einem Kunststoffschaum 18 ausgeschäumt.

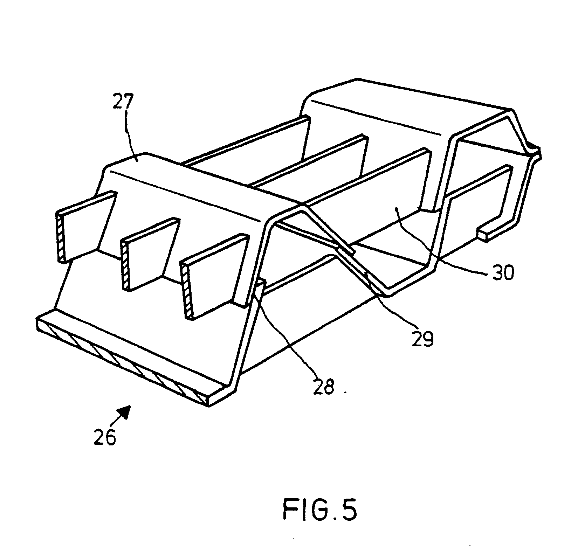

In Fig. 4 ist ein Kunststoffdämpfer 19 mit trapezartig zusammengesteckten Elementen 20 im Gehäuse 21 einschließlich Verbindungsflansch 22 wiedergegeben, in dem innen gleich geneigte Rippen 23 angeordnet sind. Diese berühren sich im Überschneidungsbereich an ihren geriffelten Gleitflächen 24. Beiderseits der Rippen 23 befindet sich in den Zwischenräumen ein Kunststoffschaum 25.

In Fig. 5 ist eine Perspektive eines Kunststoffdämpfers 26 mit Elementen 27 gezeichnet, bei dem die Gleitflächen 28 der ineinandergreifenden Rippen 29 durch elastische Körper in Form von Kunststoffstreifen 30 aneinander gedrückt werden.

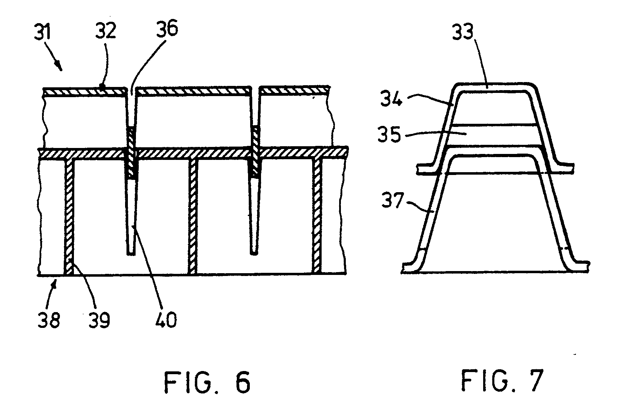

In Fig. 6 und 7 ist eine andere Ausführung eines Kunststoffdämpfers 31 in Schnitt bzw. Seitenansicht dargestellt. Das elastische Kunststoff-Element 32 besteht aus einem Riegel 33, der auf beiden Seiten mit nach außen geneigten Schenkeln 34 versehen ist, wobei jeweils gegenüberliegende Schenkel 34 durch ein Zugband 35 verbunden sind, die von oben über Spalte 36 zur Ausformung zugänglich sind. Die Enden der Schenkel 34 stützen sich außen auf korrespondierende Neigungsflächen 37 des festen Lagers 38 mit trapezartigem Querschnitt und Rippen 39 ab. Die Schlitze 40 dienen zur Aufnahme des Zugbandes 35 beim Absenken des Elementes 32, dessen Zugspannung mit der Erweiterung des Schenkelabstandes zunimmt, wodurch die Reibkraft erhöht wird.

**Patentansprüche**

1.   Kunststoffdämpfer (1,11,19,26,31) für Stoßfänger zur zerstörungsfreien Absorption von Stoßenergie beim Auffahren eines Fahrzeuges, bestehend aus einem Lager (3,12,20,27,32) im Bereich des Stoßfängers und einem Lager (3,12,20,27,38) im Bereich der Karosserie, zwischen denen ein federndes Element (2,12,20.27) aus Kunststoff vorgesehen ist, das über zusätzlich angeordnete elastische Körper (10,18,25,30,35) einstellbar ist, dadurch gekennzeichnet, daß das federnde Element (2,12,20,27) Gleitflächen (8,17,24,28,37) aufweist, mit denen es sich auf korrespondierenden Gleitflächen (9,17,24,28) der Lager (3,12,20,27,32,38) abstützt, wobei die elastischen Körper (10,18,25,30,35) zwischen zur Hauptstoßrichtung geneigten Rippen (6,15,23,29) bzw. Schenkeln (34) angeordnet sind, und wobei auf diesen Rippen (6,15,23,29) bzw. Schenkeln (34) die Gleitflächen (9,17,24,28,37) angeordnet sind.

2. Kunststoffdämpfer nach Anspruch 1, dadurch gekennzeichnet, daß das federnde Element (11,20,27,31) selbst durch spiegelsymmetrische Gestaltung die Lager (11,20,27,39) bildet, wobei sich die Gleitflächen (17,24,28) korrespondierender Rippen (15,23,29) gegenseitig abstützen.

3. Kunststoffdämpfer nach Anspruch 1, dadurch gekennzeichnet, daß das federnde Element (2) in einem die Lager (3) bildenden Gehäuse (3) angeordnet ist und aus einem Mittelsteg (5) besteht, an welchen die Rippen (6) beidseitig gegenüber der Hauptstoßrichtung abwechselnd geneigt angeordnet sind, wobei die Enden (7) der Rippen (6) mit ihren Gleitflächen (8) parallel zu den als Gleitflächen (9) dienenden Innenwandungen (9) des Gehäuses (3) abgewinkelt sind.

4. Kunststoffdämpfer nach Anspruch 1 bis 3, dadurch gekennzeichnet, daß die Gleitflächen (8,17,24,28,37) Strukturen besitzen.

5. Kunststoffdämpfer nach einem der Ansprüche 1 bis 4, dadurch gekennzeichnet, daß die elastischen Körper (10,18,25,30,35) aus Kunststoffschaum (10,18,25) bestehen.

6. Kunststoffdämpfer nach einem der Ansprüche 1 bis 4, dadurch gekennzeichnet, daß die elastischen Körper (30) aus elastisch verformbaren Kunststoffstreifen (30) bestehen.

7. Kunststoffdämpfer nach einem der Ansprüche 1 bis 6, dadurch gekennzeichnet, daß elastische Körper (10,18,25,30) verschiedener Elastizität in Stufen an einem Element (2,12,20,27) angeordnet sind.

8. Kunststoffdämpfer nach Anspruch 1, dadurch gekennzeichnet, daß das federnde Element (32) selbst ein Lager (32) darstellt und aus einem Mittelsteg (5) mit in Hauptstoßrichtung nach außen geneigten, gegenüberliegenden Schenkeln (34) besteht, welche über elastische, auf Zug beanspruchbare Körper (35) miteinander verbunden sind, wobei sich das federnde Element (32) mit seinen Gleitflächen (37) aufweisenden Schenkeln (34) auf korrespondierenden Gleitflächen (37) eines festen Lagers (38) abstützt.

9. Kunststoffdämpfer nach Anspruch 8, dadurch gekennzeichnet, daß als elastische Körper (35) Zugbänder aus Kunststoff angeordnet sind, die neben den korrespondierenden Gleitflächen (37) in Hauptstoßrichtung vorbeiführbar sind.

10. Kunststoffdämpfer nach Anspruch 8 bis 9, dadurch gekennzeichnet, daß als Rückstellorgane (35) ausgebildete elastische Körper (35) zwischen dem Element (32) und dem festem Lager (38) angeordnet sind.

## Claims

1. Shock absorbers of plastics material (1, 11, 19, 26, 31) for bumpers for the non-destructive absorption of impact energy when a vehicle is involved in a collision, consisting of a bearing (3, 12, 20, 27, 32) in the area of the bumper and a bearing (3, 12, 20, 27, 38) in the area of the body, between which bearings a resilient element of plastics material (2, 12, 20, 27) is provided, which element can be adjusted by additional elastic members (10, 18, 25, 30, 35), characterised in that the resilient element (2, 12, 20, 27) comprises slide surfaces (8, 17, 24, 28, 37), by which it is supported on corresponding slide surfaces (9, 17, 24, 28) of the bearings (3, 12, 20, 27, 32, 38), the elastic members (10, 18, 26, 30, 35) being arranged between ribs (6, 15, 23, 29) or arms (34), which are inclined in the main direction of impact, and the slide surfaces (9, 17, 24, 28, 37) being arranged on these ribs (6, 15, 23, 29) or arms (34).

2. Shock absorbers of plastics material according to claim 1, characterised in that the actual resilient element (11, 20, 27, 31) forms the bearings (11, 20, 27, 39) due to its axially symmetrical form, the slide surfaces (17, 24, 28) of corresponding ribs (15, 23, 29) supporting one another.

3. Shock absorbers of plastics material according to claim 1, characterised in that the resilient element (2) is arranged in a housing (3), which forms the bearings (3), and consists of a central web (5), at which the ribs (6) are arranged on both sides so as to be alternately inclined with respect to the main direction of impact, the ends (7) of the ribs (6) being bent together with their slide surfaces (8) parallel to the inner walls (9), which serve as slide surfaces (9), of the housing (3).

4. Shock absorbers of plastics material according to claims 1 to 3, characterised in that the slide surfaces (8, 17, 24, 28, 37) are structured.

5. Shock absorbers of plastics material according to one of claims 1 to 4, characterised in that the elastic members (10, 18, 25, 30, 35) consist of a plastics foam material (10, 18, 25).

6. Shock absorbers of plastics material according to one of claims 1 to 4, characterised in that the elastic members (30) consist of elastically deformable strips of plastics material (30).

7. Shock absorbers of plastics material according to one of claims 1 to 6, characterised in that elastic members (10, 18, 25, 30) or varying elasticity are arranged in steps at an element (2, 12, 20, 27).

8. Shock absorbers of plastics material according to claim 1, characterised in that the actual resilient element (32) represents a bearing (32) and consists of a central web (5) with opposite arms (34), which are inclined outwards in the main direction of impact and are connected together by elastic members (35), which can be subjected to tension, the resilient element (32) with its arms (34), which comprise slide surfaces (37), being supported on corresponding slide surfaces (37) of a fixed bearing (38).

9. Shock absorbers of plastics material according to claim 8, characterised in that tension straps of plastics material are provided as elastic components (35), which straps can pass next to the corresponding slide surfaces (37) in the main direction of impact.

10. Shock absorbers of plastics material according to claims 8 and 9, characterised in that elastic members (35), which are formed as return components (35), are arranged between the element (32) and the fixed bearing (38).

**Revendications**

1. Amortisseur en matière plastique (1, 11, 19, 26, 31) pour pare-chocs, destiné à l'absorption non destructive de l'énergie d'impact produit dans le tamponnement d'un véhicule, composé d'un support (3, 12, 20, 27, 32) place dans la région du pare-choc et d'un support (3, 12, 20, 27, 38) placé dans la région de la carrosserie, entre lesquels est interposé un élément amortisseur (2, 12, 21, 27) en matière plastique qui peut être ajusté à l'aide de corps élastiques (10, 18, 25, 30, 35) agencés en supplément, caractérisé en ce que l'élément amortisseur (2, 12, 20, 27) présente des surfaces de glissement (8, 17, 24, 28, 37) par lesquelles il prend appui sur des surfaces de glissement correspondantes (9, 17, 24, 28) des supports (3, 12, 20, 27, 32, 38), les corps élastiques (10, 18, 25, 30, 35) étant disposés entre des nervures (6, 15, 23, 29) ou branches (34) inclinées par rapport à la direction principale du choc, et les surfaces de glissement (9, 17, 24, 28, 37) étant prévues sur ces nervures (6, 15, 23, 29) ou branches (34).

2. Amortisseur en matière plastique selon la revendication 1, caractérisé en ce que l'élément amortisseur (11, 20, 27, 31) forme lui-même les supports (11, 20, 27, 39) grâce à une conformation symétrique, les surfaces de glissement (17, 24, 29) des nervures (15, 23, 29) correspondantes s'appuyant les unes contre les autres.

3. Amortisseur en matière plastique selon la revendication 1, caractérisé en ce que l'élément amortisseur (2) est disposé dans un boîtier (3) qui forme les supports (3), et est composé d'une âme médiane (5) sur laquelle les nervures (6) sont disposées des deux côtés, inclinées en alternance par rapport à la direction principale du choc, les extrémités (7) des nervures (6) étant coudées pour placer ainsi leurs surfaces de glissement (8) parallèlement aux parois intérieures (9) du boîtier (3) qui servent de surfaces de glissement (9).

4. Amortisseur en matière plastique selon les revendications 1 à 3, caractérisé en ce que les surfaces de glissement (8, 17, 24, 28, 37) présentent une structure.

5. Amortisseur en matière plastique selon une des revendications 1 à 4, caractérisé en ce que les corps élastiques (10, 18, 25, 30, 35) sont composés d'une mousse de matière plastique (10, 18, 25).

6. Amortisseur en matière plastique selon une des revendications 1 à 4, caractérisé en ce que les corps élastiques (30) sont composés de bandes de matière plastique (30) élastiquement déformables.

7. Amortisseur en matière plastique selon une des revendications 1 à 6, caractérisé en ce que des corps élastiques (10, 18, 25, 30) possédant différentes élasticités, sont disposés en étages contre un élément (2, 12, 20, 27).

8. Amortisseur en matière plastique selon la revendication 1, caractérisé en ce que l'élément amortisseur (32) représente lui-même un support (32) et est composé d'une âme médiane (5) présentant des branches (34) mutuellement opposées, inclinées vers l'extérieur dans la direction principale du choc, branches qui sont reliées entre elles par des corps élastiques (37) pouvant être sollicités à la traction, l'élément amortisseur (32) s'appuyant par ses branches (34) qui présentent des surfaces de glissement (37) sur des surfaces de glissement correspondantes (37) appartenant à un support fixe (38).

9. Amortisseur en matière plastique selon la revendication 8, caractérisé en ce qu'en tant que corps élastiques (35), sont prévues des bandes de traction en matière plastique qui peuvent se déplacer dans la direction principale du choc en passant à côté des surfaces de glissement (37) correspondantes.

10. Amortisseur en matière plastique selon les revendications 8 et 9, caractérisé en ce que des corps élastiques (35) formant des organes de rappel (35) sont interposés entre l'élément (32) et le support fixe (38).

FIG. 1

FIG.2

7

FIG. 3

FIG. 4

FIG.5

FIG. 6

FIG. 7